# EUROPEAN PATENT APPLICATION

(11) **EP 4 228 069 A1**
(43) Date of publication of application: **16.08.2023**
(21) Application number: 22156550.0
(22) Date of filing: 14.02.2022
(51) Int. Cl.: H01M 50/209, H01M 50/249, H01M 50/289, H01M 50/342, H01M 50/358, H01M 50/51, H01M 50/574

(54) **BATTERY PACK, ELECTRIC VEHICLE AND METHOD FOR ASSEMBLING A BATTERY PACK**

(71) Applicant: Samsung SDI Co., Ltd., Yongin-si, Gyeonggi-do 17084 (KR)
(72) Inventor: Pucher, Matthias, 8403 Lebring (AT); Erhart, Michael, 8054 Seiersberg-Pirka (AT); Hadler, Bernhard, 8073 Feldkirchen/Graz (AT)
(74) Representative: Gulde & Partner

(57) **Abstract**

The present disclosure refers to a battery pack (10), comprising: a battery housing (16) providing an interior space and comprising a plurality of crossbeams (12a, 12b, 12c, 12d) dividing the interior space of the battery housing (16) into a plurality of separated accommodation chambers (17a, 17b, 17c), a plurality of cell units (30a, 30b, ..., 30i) arranged within the battery housing (16), wherein each of the cell units (30a, 30b, ..., 30i) comprises a plurality of stacked battery cells (20), wherein each of the accommodation chambers (17a, 17b, 17c) accommodates at least two of the plurality of cell units (30a, 30b, ..., 30i) separated by at least one spacer (31) stacked between the at least two cell units (30a, 30b, ..., 30i), and at least one venting path (32) per cell unit (30a, 30b, ..., 30i), wherein each venting path (32) connects the respective cell unit (30a, 30b, ..., 30i) with a respective venting device (33) of the corresponding accommodation chamber (17a, 17b, 17c) without passing an adjacent cell unit (30a, 30b, ..., 30i).

## Description

### Field of the Disclosure

The present disclosure relates to a battery pack. The present disclosure also relates to an electric vehicle and a method for assembling a battery pack.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. Furthermore, the vehicle may include a combination of electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for electric and hybrid vehicles and the like.

Rechargeable batteries may be used as a battery module formed of a plurality of unit battery cells coupled in series and/or in parallel so as to provide a high energy content, in particular for motor driving of a hybrid vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each cell stack comprising cells connected in parallel that are connected in series (*XpYs*) or multiple cells connected in series that are connected in parallel (*XsYp*)*.*

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

In case of an abnormal operation state, a battery pack shall usually be disconnected from a load connected to a terminal of the battery pack. Therefore, battery systems further comprise a battery disconnect unit, BDU, that is electrically connected between the battery module and battery system terminals. Thus, the BDU is the primary interface between the battery pack and the electrical system of the vehicle. The BDU includes electromechanical switches that open or close high current paths between the battery pack and the electrical system.

To provide thermal control of the battery pack a thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein and thus charging and discharging performance of the rechargeable deteriorates and the life-span of the rechargeable battery is shortened.

Exothermic decomposition of cell components may lead to a so-called thermal runaway. In general, thermal runaway describes a thermal event, i.e., a process, that is accelerated by increased temperature, in turn releasing energy that further increases temperature. Thermal runaway occurs in situations where an increase in temperature changes the conditions in a way that causes a further increase in temperature, often leading to a destructive result. In rechargeable battery systems, thermal runaway is associated with strongly exothermic reactions that are accelerated by temperature rise. These exothermic reactions include combustion of flammable gas compositions within the battery pack housing. For example, when a cell is heated above a critical temperature (typically above 150°C) it can transit into a thermal runaway. The initial heating may be caused by a local failure, such as a cell internal short circuit, heating from a defect electrical contact, short circuit to a neighboring cell. During the thermal runaway, a failed battery cell, i.e., a battery cell which has a local failure, may reach a temperature exceeding 700°C. Further, large quantities of hot gas are ejected from inside of the failed battery cell through the venting opening of the cell housing into the battery pack. The main components of the vent gas are H₂, CO₂, CO, electrolyte vapor and other hydrocarbons. The vent gas is therefore burnable and potentially toxic. The vent gas also causes a gas-pressure increase inside the battery pack.

Typical battery system layouts comprise a plurality of single battery cells which are arranged together in a certain number cell stack, also called cell-modules in order to achieve an easier and more efficient handling of stacked cells. Independent of the mechanical concept, an appropriate amount of cell stacks is installed with a package-efficient orientation into a given space which is defined by the structure of the battery housing. Between those cell stacks there are multiple crossbeams and longitudinal beams provided to achieve a rigid mechanical structure, e.g., extruded profiles made out of aluminum or steel-sheet metal parts, and for a casted housing the crossbeams and longitudinal beams could be structural ribs or casted beams. The electrical connection between the cells is typically realized by using current collector structures, e.g., busbars, and the high voltage path (HV-path) can be disconnected from cells with relays which are arranged in the so-called Battery-Junction-Box or short BJB.

In case of a thermal runaway a safety concept according to the prior art comprises a hot venting gas of one or multiple battery cells in thermal runaway condition flowing unguided through the battery pack housing and releasing the gas through a venting device into the environment of the battery pack. Furthermore, in case of a thermal runaway there is a potential risk of an electric arc between the HV-path respectively the energized parts and all other electric conductive parts which are connected to ground potential. This phenomenon mainly requires two conditions. First, as the venting gas comprises metallic parts of the battery cell and graphite, once the stream of venting-gas passes through the battery pack, a considerable fraction of the battery is contaminated with electric conductive deposits. Second, a specific voltage in a specific area is required for an electric arc.

US 2014/212708 A1 discloses a battery pack being divided into a plurality of battery pack compartments. The battery pack comprises a central battery pack member also referred to as a battery pack spine that separates left and right compartments. The central battery pack member is rigidly connected with a battery housing. Battery pack compartments are sealed from one another. The battery pack utilizes one or more exhaust nozzles within each battery pack compartment. By including one or more exhaust nozzles within each battery pack compartment and by dividing battery pack compartments using internal battery pack walls also referred to as a battery pack cross-members and the central battery pack member, the risk of overheating the batteries within other battery compartments is reduced.

DE 10 2006 049 270 A1 discloses a vehicle battery with cells connected in series and two pyrotechnic fuses. The cells and the pyrotechnic fuses are arranged within a housing. The vehicle battery has a positive connection and a negative connection. The pyrotechnic fuses are controlled by a pyrotechnic control unit. The pyrotechnic fuses are arranged between the cells such that, after the cells have been separated, total voltages of less than 60 volts are present. This is because a voltage level above 60 volts requires special insulation and contact protection measures.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery pack comprises: a battery housing providing an interior space and comprising a plurality of crossbeams dividing the interior space of the battery housing into a plurality of separated accommodation chambers, a plurality of cell units arranged within the battery housing, wherein each of the cell units comprises a plurality of stacked battery cells, wherein each of the accommodation chambers accommodates at least two of the plurality of cell units separated by at least one spacer stacked between the at least two cell units, and at least one venting path per cell unit, wherein each venting path connects the respective cell unit with a respective venting device of the corresponding accommodation chamber without passing an adjacent cell unit.

According to another aspect of the present disclosure, an electric vehicle comprises the battery pack according to the present disclosure.

Yet another aspect of the present disclosure refers to a method for assembling a battery pack according to the present disclosure, wherein the method comprises the steps of: a) providing a battery housing with an interior space and a plurality of crossbeams, a plurality of cell units, a plurality of spacers and a plurality of venting devices ; b) arranging the plurality of crossbeams so as to divide the interior space of the battery housing into a plurality of separated accommodation chambers, c) arranging the plurality of cell units, the spacers and the venting devices within the battery housing, wherein each of the cell units comprises a plurality of stacked battery cells, wherein each of the accommodation chambers accommodates at least two of the plurality of cell units separated by the at least one spacer stacked between the at least two cell units, wherein the plurality of crossbeams and the plurality of cell units is arranged so that at least one venting path per cell unit is provided, wherein each venting path connects the respective cell unit with a respective venting device of the corresponding accommodation chamber without passing an adjacent cell unit.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic view of a vehicle according to an embodiment.
- Fig. 2: illustrates a perspective view of a battery pack according to an embodiment.
- Fig. 3: illustrates a first sectional view of a battery pack according to an embodiment.
- Fig. 4: illustrates a second sectional view of a battery pack according to an embodiment.
- Fig. 5: illustrates a perspective view of a spacer of a battery pack according to an embodiment.
- Fig. 6: illustrates a schematic top view of a battery pack according to an embodiment.
- Fig. 7: illustrates a schematic top view of a battery pack according to another embodiment.

### Detailed Description of the Invention

### General Concept

According to one aspect of the present disclosure, a battery pack comprises a battery housing providing an interior space and comprising a plurality of crossbeams dividing the interior space of the battery housing into a plurality of separated accommodation chambers. I.e., any two adjacently provided accommodation chambers are separated from each other by one of the crossbeams.

The battery pack further comprises a plurality of cell units arranged within the battery housing, wherein each of the cell units comprises a plurality of stacked battery cells. To arrange and retain the cell units within the battery pack, the cell units are arranged in the accommodation chambers. Thus, a subset of the plurality of cell units is separated from another subset of the plurality of cell units by at least one of the crossbeams.

Each of the accommodation chambers accommodates at least two of the plurality of cell units separated by at least one spacer stacked between the at least two cell units. I.e., the battery pack comprises at least one spacer per accommodation chamber. At least two of the plurality of cell units are stacked with one of the spacers between the at least two cell units. I.e., the at least two cell units and the spacer between the at least two cell units form a cell stack which can be efficiently accommodated within one of the accommodation chambers. Thus, a cell stack comprises at least two cell units and at least one spacer, wherein the at least two cell units and the at least one spacer are stacked alternatingly.

The battery pack further comprises at least one venting path per cell unit, wherein each venting path connects the respective cell unit with a respective venting device of the corresponding accommodation chamber without passing an adjacent cell unit. The at least one venting path of the cell unit is arranged to allowing a communication of a venting gas from at least one of the battery cells of the respective cell unit with the respective venting device. The spacer of one of the cell stacks in one of the accommodation chambers is arranged so that the venting path does not pass an adjacent cell unit within the accommodation chamber. The crossbeams make sure that a venting gas cannot pass from one of the accommodation chambers to another of the accommodation chambers. Thus, the venting path is geometrically constrained by the at least one spacer per cell stack and the crossbeams.

In other words, since, from structural point of view, crossbeams are to be provided, the crossbeams are used to achieve a separation between the accommodation chambers and the cell stacks retained therein. With that separation it is possible to protect neighboring rows of cell stacks efficiently against hot vent gases. Furthermore, due to the separation by the crossbeams, a particular efficient guiding of the vent-gas to an appropriate venting device is enabled, wherein each cell unit has its own interface, i.e., its own venting path to a venting device. This spatial separation of the cell units by the spacers and the crossbeams and of cell stacks by the crossbeams lowers the risk of a total destruction of the battery pack significantly. Depending on the arrangement and orientation of the cell units a proper layout of a high voltage path allows to implement an efficient minimization of the risk of arcing.

The spacer being stacked between the cell units instead of being a part of the battery housing has the positive effect that just one single compression device for compressing the whole cell stack comprising at least two cell units and the at least one spacer has to be provided instead of one compression device for each cell unit and a separate step of assembling the cell units and the spacer. This improves the efficiency of the manufacturability of the battery pack.

According to one embodiment, the cell units are connected between a positive battery pack terminal and a negative battery pack terminal such that the cell units are electrically connected in a series connection, wherein the series connection comprises at least two partial series connections each connecting a number of cell units being larger than one in series. The combination of spatial separated rows of cell stacks and/or of cell units by the spacer and an application specific high voltage path routing with the two partial series connection increases the safety performance significantly and cost-efficiently. Thus, the partial series connections are adapted to lead to a voltage level to prevent arcing inside the battery.

According to another embodiment, the battery pack comprises at least one disconnecting member selectively interconnecting the at least two partial series connections. The series connection is divided in the at least two partial series connections by a selectively electrically conducting disconnection member. Thus, it is possible to split up the series connection with a certain voltage into the partial series connections with voltages that are smaller than the voltage of the entire series connection, each. Thus, only a small number of disconnection devices in the high voltage path are required, which will be triggered once a thermal event has been started to break down the total voltage of the defective cell stack into further smaller units so that the risk of arcing is minimized reliably. Optionally, the disconnection member is arranged in one of the spacers to achieve an efficient separation of the partial series connections.

According to another embodiment, the battery pack is adapted to open the disconnecting member in case of a thermal runaway, a shortcut between the positive battery pack terminal and the negative battery pack terminal and/or an accident of a vehicle comprising the battery pack. Each of the above-mentioned criteria can lead to a thermal event and/or to arcing and can present a severe safety issue. The embodiment enables the battery pack to increases the safety performance significantly. Optionally, a BDU and/or a BMM of the battery pack triggers a disconnect signal that is transmitted to the disconnecting members to open the disconnecting member, i.e., to make the disconnection member to transition from an electrically conducting state into an electrically isolating state.

According to another embodiment, cell units of each partial series connection are arranged in different accommodation chambers. Conversely, the accommodation chamber comprises cell units that are not connected via the same partial series connection. This achieves an efficient protection of cell units within the same accommodation chamber as the cell units within the same accommodation chamber are not connected via the same partial series connection. Thus, a thermal event in a cell unit of one the partial series connections and in one of accommodation chamber does not influence another cell unit within the same accommodation chamber by means of the different partial series connections and is does also not influence another cell unit within an adjacent accommodation chamber by the physical separation by one of the crossbeams.

According to another embodiment, the battery pack comprises a vent gas guide adapted to direct vent gas of one of the cell units to the respective venting device. This achieves reliably that the vent gas is guided from the battery cell where a thermal event occurs to the venting device. The vent gas guide can comprise portions of the crossbeams to achieve an efficient construction and/or gas guide portions which are separate from the crossbeams to enable a variable arrangement of the vent gas guide.

According to another embodiment, each of the accommodation chambers comprises at least one venting device per cell unit to allow an efficient transport of vent gas to the venting devices.

According to another embodiment, each venting device comprises a burst membrane adapted to burst when a pressure within one of the accommodation chambers exceeds a predetermined pressure to efficiently seal the battery pack if no thermal event occurred and to release vent gas if necessary.

According to another embodiment, the battery cells of each of the cell units are electrically connected in series to provide the required voltage within each of the cell units.

According to another embodiment, the venting paths of two adjacent cell units within the same accommodation chamber extend through the spacer stacked between the two adjacent cell units. Optionally, a bottom cover of the hosing, a top cover of the housing and/or the spacer can comprise the venting device and a terminal of the vent gas guide. This allows an efficient arrangement of the venting paths and a well-defined release of vent gas if necessary.

According to another embodiment, a lateral extension of each of the crossbeams matches a lateral extension of the battery housing. I.e., the height of the crossbeams reaches from a bottom of the housing to a top of the housing, e.g., each of the crossbeams extends from a bottom cover to a top cover. Thus, the crossbeams achieve a certain separation between the cell stacks to efficiently prevent a vent gas to flow from one accommodation chamber to another accommodation chamber. A sealing member can be dispensed with.

According to another embodiment, the housing comprises an interior separation member providing a collecting chamber within the housing, and each venting path is arranged to extend into the collecting chamber. This embodiment enables that the vent gas can be collected efficiently in the collecting chamber. The interior separation member can be arranged between the cell stacks and a top cover of the battery housing and/or between the cell stacks and a bottom cover of the battery housing. The collecting chamber is arranged between the interior separation member and the top cover and/or the bottom cover, respectively.

According to another embodiment, the housing comprises a duct member for a fluid communication between the collecting chamber and an exterior of the battery pack. This allows a well-defined release of vent gas that has been collected in the collecting chamber out of the battery pack.

According to another aspect of the present disclosure, an electric vehicle comprises the battery pack according to the present disclosure. The battery pack of the electric vehicle can comprise any of the aforementioned optional features to achieve the technical effects associated therewith.

Yet another aspect of the present disclosure refers to a method for assembling a battery pack according to the present disclosure, wherein the method comprises the steps of: a) providing a battery housing with an interior space and a plurality of crossbeams, a plurality of cell units, a plurality of spacers and a plurality of venting devices, b) arranging the plurality of crossbeams so as to divide the interior space of the battery housing into a plurality of separated accommodation chambers, c) arranging the plurality of cell units, the spacers and the venting devices within the battery housing, wherein each of the cell units comprises a plurality of stacked battery cells, wherein each of the accommodation chambers accommodates at least two of the plurality of cell units separated by the at least one spacer stacked between the at least two cell units, wherein the plurality of crossbeams and the plurality of cell units is arranged so that at least one venting path per cell unit is provided, wherein each venting path connects the respective cell unit with a respective venting device of the corresponding accommodation chamber without passing an adjacent cell unit. The method can comprise methods steps to assemble a battery pack comprising any of the aforementioned optional features to achieve the technical effects associated therewith.

### Specific Embodiments

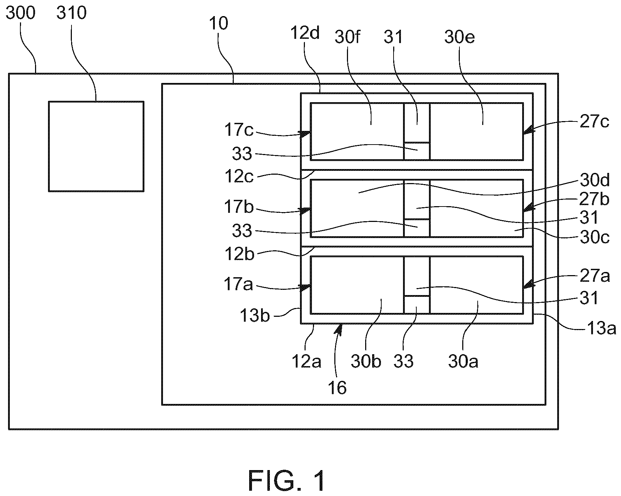

Figure 1 illustrates a schematic view of a vehicle 300 according to an embodiment.

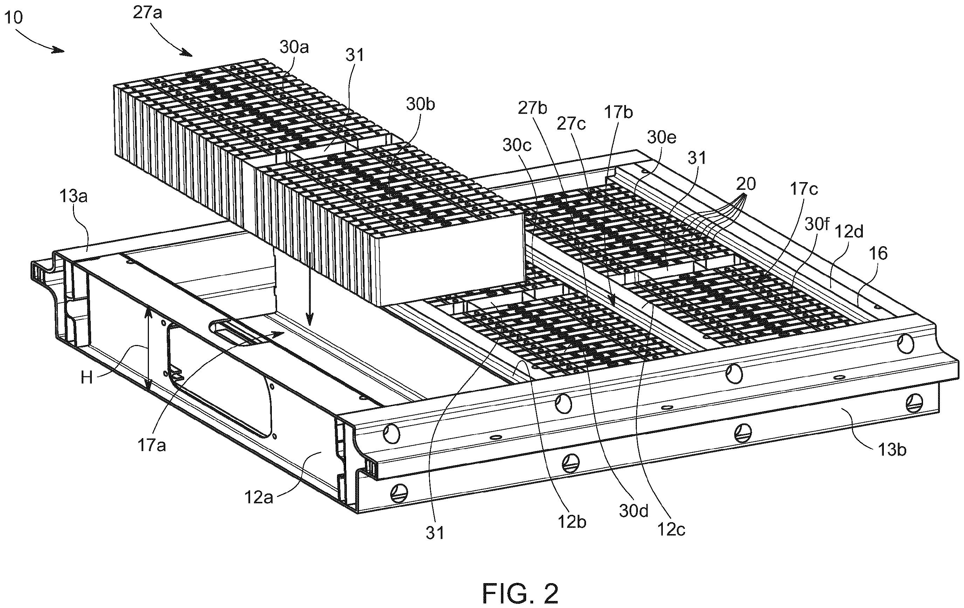

The vehicle 300 is propelled by an electric motor 310, using energy stored in rechargeable batteries cells 20 (not indicated in Fig. 1, see Figures 2 to 6) arranged in a battery pack 10. The battery cells 20 are arranged in a stacked manner in cell stacks 27a, 27b, 27c.

Figure 2 illustrates a perspective view of a battery pack 10 according to an embodiment.

The battery pack 10 comprises a battery housing 16 providing an interior space and comprising a plurality of crossbeams 12a, 12b, 12c, 12d dividing the interior space of the battery housing 16 into a plurality of separated accommodation chambers 17a, 17b, 17c.

The battery pack 10 comprises cell stacks 27a, 27b, 27c. Each of the cell stacks 27a, 27b, 27c is arranged or to be arranged in one of the accommodation chambers 17a, 17b, 17c. Specifically, as indicated by the arrow pointing from the cell stack 27a to the accommodation chamber 17a, the cell stack 27a is to be retained in the accommodation chamber 17a. Each of the cell stacks 27a, 27b, 27c comprises two cell units 30a, 30b, ..., 30f. The battery pack 10 comprises a plurality of spacers 31. Each of the cell stacks 27a, 27b, 27c comprises one of the plurality of spacers 31. Each of the plurality of spacers 31 is arranged between two of the cell units 30a, 30b, ..., 30f.

Thus, battery pack 10 comprises the plurality of cell units 30a, 30b, ..., 30f arranged within the battery housing 16. Each of the cell units 30a, 30b, ..., 30f comprises a plurality of stacked battery cells 20 (e.g., prismatic battery cells). Each of the accommodation chambers 17a, 17b, 17c accommodates two of the plurality of cell units 30a, 30b, ..., 30f separated by one of the spacers 31 stacked between the two cell units 30a, 30b, ..., 30d.

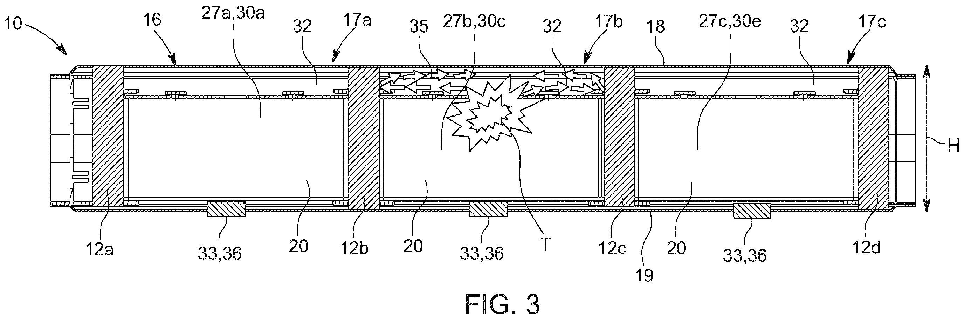

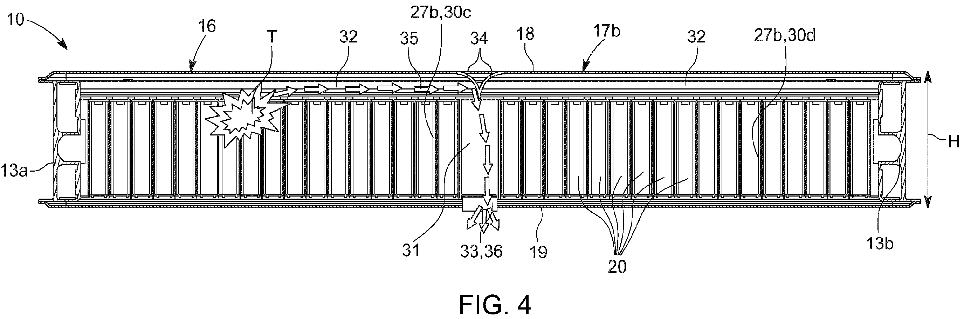

The battery pack 10 comprises at least one venting path 32 (not indicated in Figure 1, see Figure 3 and 4) per cell unit 30a, 30b, ..., 30f and a venting device 33 (not indicated in Figure 1, see Figure 3 and 4) for each of the accommodation chambers 17a, 17b, 17c. Each venting path 32 connects the respective cell unit 30a, 30b, ..., 30d with a respective venting device 33 of the corresponding accommodation chamber 17a, 17b, 17c without passing an adjacent cell unit 30a, 30b, ..., 30d.

The battery pack 10 comprises three rows of cell stacks 27a, 27b, 27c in the shown embodiment. To provide structural support for the battery pack 10 and for retaining the cell stacks 27a, 27b, 27c, the battery pack 10 comprises two longitudinal beams 13a, 13b and the plurality of crossbeams 12a, 12b, 12c, 12d arranged between and connected to the longitudinal beams 13a, 13b.

The crossbeams 12a, 12b, 12c, 12d are arranged in parallel to each other and the plurality of crossbeams 12a, 12b, 12c, 12d comprises two outer crossbeams 12a, 12d and, in this embodiment, two inner crossbeam 12b, 12c. It is possible that a battery pack comprises a different number of crossbeams and/or differently-sized longitudinal beams to provide a differently sized battery pack.

The cell stacks 27a, 27b, 27c and the crossbeams 12b, 12c are alternately stacked between the two outer crossbeams 12a, 12d. Thus, the accommodation chambers 17a, 17b, 17c to retain the cell stacks 27a, 27b, 27c are provided between any neighboring pair of crossbeams 12a, 12b, 12c, 12d.

The length of each of the crossbeams 12a, 12b, 12c, 12d in an elongation direction pointing from one of the longitudinal beams 13a to the other longitudinal beam 13b matches the length of the cell stacks 27a, 27b, 27c so that cell stacks 27a, 27b, 27c can be arranged and retained between the pairs of crossbeams 12a, 12b, 12c, 12d.

A lateral extension of each of the crossbeams 12a, 12b, 12c, 12d matches a lateral extension of the battery housing 16. I.e., a height H of the crossbeams 12a, 12b, 12c, 12d reaches from a bottom cover 19 (not shown in Figure 2, see Figures 3 and 4) of the battery housing 16 to a top cover 18 (not shown in Figure 2, see Figures 3 and 4) of the battery housing 16 to match the height H of the battery housing 16. The accommodation chambers 17a, 17b, 17c and thus the cell stacks 27a, 27b, 27c are therefore separated from each other by the crossbeams 12a, 12b, 12c, 12d so that no vent gas 35 can flow from one of the accommodation chambers 17a, 17b, 17c to another of the accommodation chambers 17a, 17b, 17c or so that the flow of vent gas 35 from one of the accommodation chambers 17a, 17b, 17c to another of the accommodation chambers 17a, 17b, 17c is negligible.

The two longitudinal beams 13a, 13b are arranged in parallel to each other, and each of the two longitudinal beams 13a, 13b is elongated along the first extension direction. The crossbeams 12a, 12b, 12c, 12d are arranged in parallel to each other, and each of the crossbeams 12a, 12b, 12c, 12d is elongated along the second extension direction. I.e., the crossbeams 12a, 12b, 12c, 12d and the two longitudinal beams 13a, 13b are arranged perpendicular to each other. Thus, accommodation chambers 17a, 17b, 17c with a rectangular cross-section to retain the cell stacks 27a, 27b, 27c are formed in the battery pack 10.

Each of the crossbeams 12a, 12b, 12c, 12d is connected to the two longitudinal beams 13a, 13b by a plurality of fasteners (not shown) extending into the second extension direction through the longitudinal beams 13a, 13b and into the crossbeams 12a, 12b, 12c, 12d. The longitudinal beams 13a, 13b comprise openings through which the fasteners extend into the crossbeams 12a, 12b, 12c, 12d.

The longitudinal beams 13a, 13b and the crossbeams 12a, 12b, 12c, 12d are extruded beams. The number of inner crossbeams 12b, 12c equals the number of cell stacks 27a, 27b, 27c minus one. Each of the cell stacks 27a, 27b, 27c is mounted between a pair of adjacent crossbeams 12a, 12b, 12c, 12d.

The battery housing 16 comprises an interior separation member (not shown in the Figures) providing a collecting chamber within the battery housing 16, and each venting path 32 is arranged to extend into the collecting chamber. The battery housing 16 comprises a duct member (not shown in the Figures) for a fluid communication between the collecting chamber and an exterior of the battery pack 10.

Figure 3 illustrates a first sectional view of a battery pack 10 according to an embodiment. The first sectional view of the battery pack 10 shows a section of the battery pack 10 as described with reference to Figure 2, wherein the section shows a cross-section in a plane perpendicular to the elongation direction of the crossbeams 12a, 12b, 12c, 12d.

In Figure 3, a thermal event T is illustrated. I.e., one of the battery cells 20 of the cell stack 27b, specifically of cell unit 30c, has reached a temperature so that a vent gas 35 leaves the battery cell 20. The vent gas 35 flows along a venting path 32 through the battery pack 10. The venting path 32 is arranged on top of the cell stack 27b, specifically of the cell unit 30c and below the top cover 18.

As shown in Figure 3, due to the crossbeams 12a, 12b, 12c, 12d, specifically, the inner crossbeams 12b, 12c in this illustration, the vent gas 35 is kept in the accommodation chamber 17b in which the thermal event T occurred and cannot leave the accommodation chamber 17b and flow in one of the adjacent accommodation chambers 17a, 17c. I.e., due to the crossbeams 12b, 12c, the venting path 32 does not pass one of the adjacent cell units 30a, 30c in the adjacent accommodation chambers 17a, 17c. The venting path 32 connects the cell unit 30b via one of the spacers 31 with a respective venting device 33 of the corresponding accommodation chamber 17b without passing an adjacent cell unit 30a, 30c, 30d, 30e, 30f as described with reference to Figure 4.

The battery pack 10 comprises one venting path 32 per cell unit 30a, 30b, ..., 30f and one venting device 33 for each of the accommodation chambers 17a, 17b, 17c. Each venting path 32 connects the respective cell unit 30a, 30b, ..., 30d with a respective venting device 33 of the corresponding accommodation chamber 17a, 17b, 17c without passing an adjacent cell unit 30a, 30b, ..., 30d. The venting devices 33 are arranged in the bottom cover 19 of the housing 16.

Each of the accommodation chambers 17a, 17b, 17c comprises one venting device 33 per cell stack 27a, 27b, 27c, i.e., each of the cell units 30a, 30b, ..., 30f is connected via a venting path 32 with one of the venting devices 33.

Each of the venting devices 33 comprises a burst membrane 36 adapted to burst when a pressure within one of the accommodation chambers 17a, 17b, 17c exceeds a predetermined pressure.

Figure 4 illustrates a second sectional view of a battery pack 10 according to an embodiment. The second sectional view of the battery pack 10 shows a section of the battery pack 10 as described with reference to Figures 2 and 3, wherein the section shows a cross-section in a plane perpendicular to the elongation direction of the longitudinal beams 13a, 13b, i.e., perpendicular to the elongation direction of the crossbeams 12a, 12b, 12c, 12d. Figure 4 shows a thermal event T occurring in one of the battery cells 20 of one of the cell stacks 27b, specifically in one of the cell units 30c as explained with reference to Figure 3.

The venting device 33 is arranged below the spacer 31 of the cell stack 27b and at the bottom cover 19 of the housing 16. Thus, the venting device 33 of the cell units 30c, 30d of the cell stack 27b in the accommodation chamber 17b is arranged below the corresponding spacer 31 between the cell units 30c, 30d. I.e., each of the cell stacks 27a, 27b, 27b comprises one venting device 33 that is arranged below the respective spacer 31 between the cell units 30a, 30b, ..., 30f of the respective cell stack 27a, 27b, 27c.

The venting path 32 is arranged on top of the cell stack 27b, specifically of the cell unit 30c and extends over any of the battery cells 20 of the cell unit 30c. Thus, from any of the battery cell 20 of the cell unit 30c, the vent gas 35 can flow from the battery cell 20 along the venting path 32 through the spacer 31 to the respective venting device 33 of the corresponding accommodation chamber 17b.

The battery pack 10 comprises a vent gas guide 34. The vent gas guide 34 comprises two sheet metal portions arranged and fixed at the top cover 18. The vent gas guide 34 is adapted to direct vent gas 35 of one of the cell units 30a, 30b, ..., 30i to the respective venting device 33 via the venting path 32 through the spacer 31. Due to the thermal event T, the vent gas 35 directs the vent gas 35 from the battery cells 20 of the cell unit 30c to the venting device 33. The vent gas guide 34 is arranged at the top cover 18 of the housing 16 and opposite to the venting device 33. Thus, the vent gas guide 34 is arranged above the spacer 31.

The venting device 33 is arranged within the spacer 31 that separated the cell units 30c, 30d of the cell stack 27b in the accommodation chamber 17b from each other. Thus, the venting path 32 connects the respective cell unit 30b with the venting device 33 of the corresponding accommodation chamber 17b without passing an adjacent cell unit 30d within the same accommodation chamber 17b. As explained with reference to Figure 3, the venting path 32 is arranged that the vent gas 35 cannot pass an adjacent accommodation chamber 17a, 17c. Thus, the venting path 32 connects the respective cell unit 30b with the venting device 33 of the corresponding accommodation chamber 17b without passing any of the adjacent cell units 30a, 30d, 30e being arranged within in any of the accommodation chamber 17a, 17b 17c.

By the arrangement of the venting path 32 on top of the cell stack 27b, the venting path 32 of the adjacent cell units 30c, 30d within the same accommodation chamber 17b extends through the spacer 31 stacked between the adjacent cell units 30c, 30d. The venting path 32 of two adjacent cell units 30c, 30d within the same accommodation chamber 17b extend through the spacer 31 stacked between the two adjacent cell units 30c, 30d.

Due to the vent gas guide 34, venting paths 32 of the adjacent cell units 30c, 30d do not overlap until the venting paths 32 reach the spacer 31.

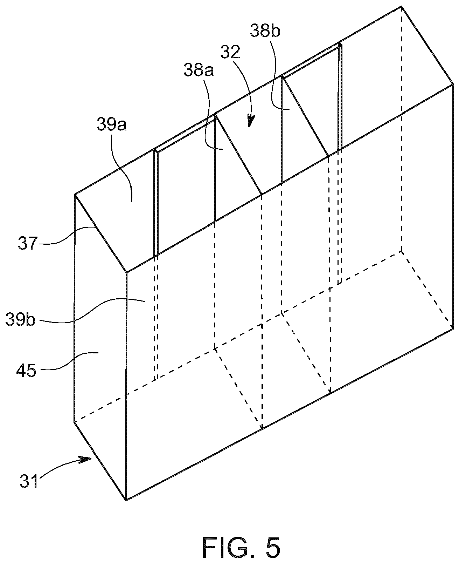

Figure 5 illustrates a perspective view of a spacer 31. The spacer 31 is a spacer as comprised by the battery pack 10.

The spacer 31 comprises a spacer frame 37. E.g., the spacer frame 37 is made of sheet metal.

The spacer 31 comprises two longitudinal side surfaces 39a, 39b and two narrow side surfaces 45. The area of each of the longitudinal side surfaces 39a, 39b is larger than the area of the two narrow side surfaces 45. The longitudinal side surfaces 39a, 39b are parallel to each other. In each of the cell stacks 27a, 27b, 27c as shown in Figures 2 to 6, each of the longitudinal side surfaces 39a, 39b of the spacer 31 contacts one of the battery cells 20 of the cell stacks 27a, 27b, 27c.

The spacer 31 comprises two vent gas duct members 38a, 38b. Each of the vent gas duct members 38a, 38b is attached to, e.g., by welding, clamping and/or gluing, one of the longitudinal side surfaces 39a. Each of the vent gas duct members 38a, 38b extends from one of the longitudinal side surfaces 39a to the other longitudinal side surface 39b so that a part of the venting path 32 is formed between and constraint by the vent gas duct members 38a, 38b and the longitudinal side surfaces 39a, 39b.

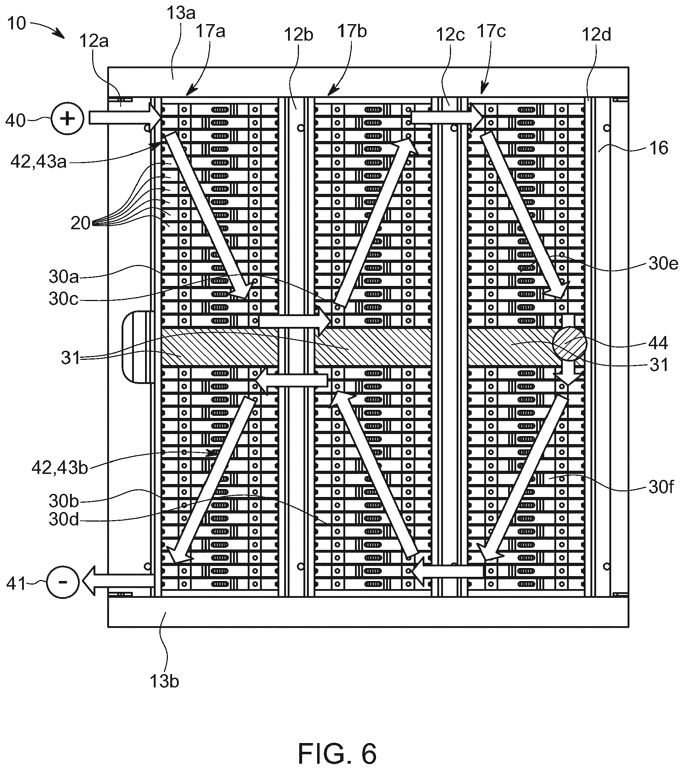

Figure 6 illustrates a schematic top view of a battery pack 10 according to an embodiment. The battery pack 10 as shown in Figure 6 is the battery pack 10 as described with reference to Figures 1 to 5. In this schematic top view, a series connection 42 and partial series connections 43a, 43b are indicated by double arrows with solid lines, wherein the direction of the arrows indicate the direction of an electric current flowing between a positive battery pack terminal 40 and a negative battery pack terminal 41.

The battery cells 20 of each of the cell units 30a, 30b, ..., 30i are electrically connected in series as illustrated by the double arrows with solid lines. The cell units 30a, 30b, ..., 30f are connected between the positive battery pack terminal 40 and the negative battery pack terminal 41 such that the cell units 30a, 30b, ..., 30f are electrically connected in a series connection 42. I.e., all the battery cells 20 of the battery pack 10 are connected in the series connection 42.

The series connection 42 comprises two partial series connections 43a, 43b each connecting a number of cell units 30a, 30b, ..., 30f being larger than one in series. In this embodiment, each of the two partial series connections 43a, 43b electrically interconnects three cell units 30a, 30b, ..., 30f. I.e., one of the two partial series connections 43a electrically interconnects the cell units 30a, 30c, 30e in a series connection, and the other of the partial series connections 43b electrically interconnects the remaining cell units 30b, 30d, 30f in a series connection. Each of the partial series connections 43a, 43b connects cell units 30a, 30b, ..., 30f arranged in different accommodation chambers 17a, 17b, 17c with each other. E.g., Partial series connection 43a connects cell units 30a, 30c, 30e each of which being arranged in one of the accommodation chambers 17a, 17b, 17c in series. Partial series connection 43b connects cell units 30b, 30d, 30f each of which being arranged in one of the accommodation chambers 17a, 17b, 17c in series. Any two cell units 30a, 30b, ..., 30e of one of the partial series connections 43a, 43b are arranged in different accommodation chambers 17a, 17b, 17c.

The battery pack 10 comprises a disconnecting member 44 selectively interconnecting the at least two partial series connections 43a, 43b. The battery pack 10 is adapted to open the disconnecting member 44 in case of a thermal runaway, a shortcut between the positive battery pack terminal 40 and the negative battery pack terminal 41 and/or an accident of a vehicle 300 comprising the battery pack 10. This, and the separation of cell units 30a, 30b, ..., 30f by the crossbeams 12a, 12b, 12c, 12d make sure that even in case of a thermal event T, in which battery cells 20 are contaminated with electric conductive deposits, the voltage of the cells 20 within one of the accommodation chambers 17a, 17b, 17c and being connected by one of the partial series connections 43a, 43b cannot be larger than the voltage of one of the cell units 30a, 30b, ..., 30f. This reduces the risk of arcing by using, in this embodiment, only the disconnecting member 44. The disconnecting member 44 is arranged and the partial series connections 43a, 43b are adapted so that the voltage of each of the partial series connections 43a, 43b equals the voltage of the battery cells 20 of three cell units 30a, 30b, ..., 30e.

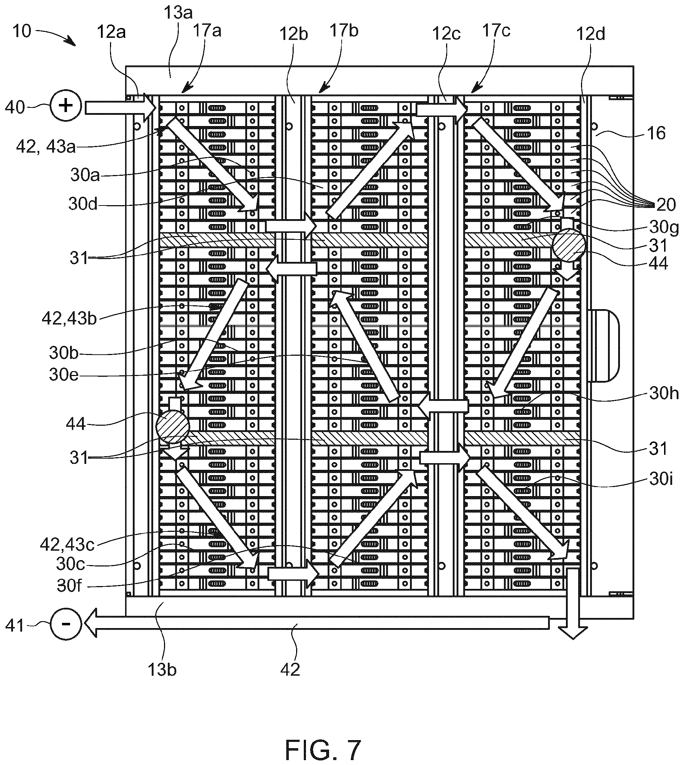

Figure 7 illustrates a schematic top view of a battery pack 10 according to another embodiment. The embodiment of the battery pack 10 of Figure 7 is described with reference to the embodiment of the battery pack 10 of Figures 1 to 6, wherein the differences between the embodiments of the battery packs 10 are detailed. In this schematic top view, a series connection 42 and partial series connections 43a, 43b, 43c are indicated by double arrows with solid lines, wherein the direction of the arrows indicate the direction of an electric current flowing between a positive battery pack terminal 40 and a negative battery pack terminal 41.

Each of the cell stacks 27a, 27b, 27c comprises three cell units 30a, 30b, ..., 30i and two spacers 31, wherein one of the spacers 31 is arranged between any two cell units 30a, 30b, ..., 30i of the same accommodation chamber 17a, 17b, 17c.

The series connection 42 comprises three partial series connections 43a, 43b, 43c each connecting a number of cell units 30a, 30b, ..., 30i being larger than one in series. In this embodiment, each of the three partial series connections 43a, 43b, 43c electrically interconnects three cell units 30a, 30b, ..., 30i. I.e., one of the three partial series connections 43a electrically interconnects the cell units 30a, 30d, 30g in a series connection, and the other of the partial series connections 43b electrically interconnects the cell units 30b, 30e, 30h in a series connection, and yet another of the partial series connections 43c electrically interconnects the remaining cell units 30c, 30f, 30i in a series connection. Each of the partial series connections 43a, 43b, 43c connects cell units 30a, 30b, ..., 30i arranged in different accommodation chambers 17a, 17b, 17c with each other. E.g., Partial series connection 43a connects cell units 30a, 30d, 30g each of which being arranged in one of the accommodation chambers 17a, 17b, 17c in series. Partial series connection 43b connects cell units 30b, 30e, 30h each of which being arranged in one of the accommodation chambers 17a, 17b, 17c in series. Partial series connection 43c connects cell units 30c, 30f, 30i each of which being arranged in one of the accommodation chambers 17a, 17b, 17c in series. Any two cell units 30a, 30b, ..., 30e of one of the partial series connections 43a, 43b, 43c are arranged in different accommodation chambers 17a, 17b, 17c.

The battery pack 10 comprises two disconnecting member 44 selectively interconnecting the at least two partial series connections 43a, 43b, 43c. The battery pack 10 is adapted to open the disconnecting member 44 in case of a thermal runaway, a shortcut between the positive battery pack terminal 40 and the negative battery pack terminal 41 and/or an accident of a vehicle 300 comprising the battery pack 10. This and the separation of cell units 30a, 30b, ..., 30i by the crossbeams 12a, 12b, 12c, 12d make sure that even in case of a thermal event T, in which battery cells 20 are contaminated with electric conductive deposits, the voltage of the cells 20 within one of the accommodation chambers 17a, 17b, 17c and being connected by one of the partial series connections 43a, 43b, 43c cannot be larger than the voltage of one of the cell units 30a, 30b, ..., 30i. This reduces the risk of arcing by using, in this embodiment, only two disconnecting members 44.

The disconnecting members 44 are arranged and the partial series connections 43a, 43b, 43c are adapted so that the voltage of each of the partial series connections 43a, 43b, 43c equals the voltage of the battery cells 20 of three cell units 30a, 30b, ..., 30i. I.e., the number of disconnecting members 44 equals the number of cell units 30a, 30b, ..., 30i divided by three minus one. The disconnecting members 44 are arranged in spacers 31 that are arranged in different accommodation chambers 17a, 17c, 17c.

Compared to arranging the partial series connections 43a, 43b, 43c per accommodation chamber 17a, 17b, 17c (not shown) and providing disconnecting members 44 between the partial series connections 43a, 43b, 43c, the above-described arrangement achieves an optimized safety performance as also the crossbeams 12a, 12b, 12c, 12d provide a further reduction of a potentially safety-relevant voltage in case of a thermal event T. E.g., if cell units 30a, 30b, ..., 30i within one cell stack 27a, 27b, 27c per accommodation chamber 17a, 17b, 17c were connected in series with a partial series connection (not shown) and adjacent cell stacks 27a, 27b, 27c were separated by a disconnection member 44, each of the partial series connection would lead to a voltage of three cell units 30a, 30b, ..., 30i as described above. However, in case of a thermal event T in the middle cell unit 30e of the middle cell stack 27b, electrically conductive deposits could reach neighboring cell units 30d, 30f within the accommodation chamber 17b and lead to a voltage in the accommodation chamber 17b that equals the voltage of the cells 20 of the entire cell stack 27b. Thus, to achieve a voltage within each of the accommodation chambers 17a, 17b, 17c that equals less or equal than the voltage of a cell unit 30a, 30b, ..., 30i, six disconnection members 44 were necessary, since the cell units 30a, 30b, ..., 30i within the same accommodation chambers 17a, 17b, 17cwould need to be disconnectable from each other.

### Reference signs

- 10: battery pack
- 12a, 12b, 12c, 12d: crossbeam
- 13a, 13b: longitudinal beam
- 16: battery housing
- 17a, 17b, 17c: accommodation chambers
- 18: top cover
- 19: bottom cover
- 20: battery cell

- 27a, 27b, 27c: cell stack

- 30a, 30b, ..., 30i: cell units
- 31: spacer
- 32: venting path
- 33: venting device
- 34: vent gas guide
- 35: vent gas
- 36: burst membrane
- 37: spacer frame
- 38a, 38b: vent gas duct member
- 39a, 39b: longitudinal side surface

- 40: positive battery pack terminal
- 41: negative battery pack terminal
- 42: series connection
- 43a, 43b, 43c: partial series connection
- 44: disconnecting member
- 45: narrow side surface

- 300: vehicle
- 310: electric motor

- H: height
- T: thermal event

## Claims

1. A battery pack (10), comprising:
- a battery housing (16) providing an interior space and comprising a plurality of crossbeams (12a, 12b, 12c, 12d) dividing the interior space of the battery housing (16) into a plurality of separated accommodation chambers (17a, 17b, 17c),
- a plurality of cell units (30a, 30b, ..., 30i) arranged within the battery housing (16), wherein each of the cell units (30a, 30b, ..., 30i) comprises a plurality of stacked battery cells (20), wherein each of the accommodation chambers (17a, 17b, 17c) accommodates at least two of the plurality of cell units (30a, 30b, ..., 30i) separated by at least one spacer (31) stacked between the at least two cell units (30a, 30b, ..., 30i), and
- at least one venting path (32) per cell unit (30a, 30b, ..., 30i), wherein each venting path (32) connects the respective cell unit (30a, 30b, ..., 30i) with a respective venting device (33) of the corresponding accommodation chamber (17a, 17b, 17c) without passing an adjacent cell unit (30a, 30b, ..., 30i).

2. The battery pack according to claim 1, wherein
- the cell units (30a, 30b, ..., 30i) are connected between a positive battery pack terminal (40) and a negative battery pack terminal (41) such that the cell units (30a, 30b, ..., 30i) are electrically connected in a series connection (42), wherein
- the series connection (42) comprises at least two partial series connections (43a, 43b, 43c) each connecting a number of cell units (30a, 30b, ..., 30i) being larger than one in series.

3. The battery pack according to claim 2, wherein the battery pack (10) comprises at least one disconnecting member (44) selectively interconnecting the at least two partial series connections (43a, 43b, 43c).

4. The battery pack according to claim 3, wherein the battery pack (10) is adapted to open the disconnecting member (44) in case of a thermal runaway, a shortcut between the positive battery pack terminal (40) and the negative battery pack terminal (41) and/or an accident of a vehicle (300) comprising the battery pack (10).

5. The battery pack according to any one of claims 2 to 4, wherein cell units (30a, 30b, ..., 30i) of each partial series connection (43a, 43b, 43c) are arranged in different accommodation chambers (17a, 17b, 17c).

6. The battery pack according to any one of the preceding claims, wherein the battery pack (10) comprises a vent gas guide (34) adapted to direct vent gas (35) of one of the cell units (30a, 30b, ..., 30i) to the respective venting device (33).

7. The battery pack according to any one of the preceding claims, wherein each of the accommodation chambers (17a, 17b, 17c) comprises at least one venting device (33) per cell unit (30a, 30b, ..., 30i).

8. The battery pack according to any one of the preceding claims, wherein each venting device (33) comprises a burst membrane (36) adapted to burst when a pressure within one of the accommodation chambers (17a, 17b, 17c) exceeds a predetermined pressure.

9. The battery pack according to any one of the preceding claims, wherein the battery cells (20) of each of the cell units (30a, 30b, ..., 30i) are electrically connected in series.

10. The battery pack according to any one of the preceding claims, wherein the venting paths (32) of two adjacent cell units (30a, 30b, ..., 30i) within the same accommodation chamber (17a, 17b, 17c) extend through the spacer (31) stacked between the two adjacent cell units (30a, 30b, ..., 30i).

11. The battery pack according to any one of the preceding claims, wherein a lateral extension of each of the crossbeams (12a, 12b, 12c, 12d) matches a lateral extension of the battery housing (16).

12. The battery pack according to any one of the preceding claims, wherein the housing (16) comprises an interior separation member providing a collecting chamber within the housing (16), and each venting path (32) is arranged to extend into the collecting chamber.

13. The battery pack according claim 12, wherein the housing (16) comprises a duct member for a fluid communication between the collecting chamber and an exterior of the battery pack (10).

14. A vehicle (300) comprising the battery pack (10) according to any one of the preceding claims.

15. A method for assembling a battery pack (10) according to any one of the preceding claims, wherein the method comprises the steps of:
a) providing a battery housing (16) with an interior space and a plurality of crossbeams (12a, 12b, 12c, 12d), a plurality of cell units (30a, 30b, ..., 30i), a plurality of spacers (31) and a plurality of venting devices (33);
b) arranging the plurality of crossbeams (12a, 12b, 12c, 12d) so as to divide the interior space of the battery housing (16) into a plurality of separated accommodation chambers (17a, 17b, 17c);
c) arranging the plurality of cell units (30a, 30b, ..., 30i), the spacers (31) and the venting devices (33) within the battery housing (16), wherein each of the cell units (30a, 30b, ..., 30i) comprises a plurality of stacked battery cells (20), wherein each of the accommodation chambers (17a, 17b, 17c) accommodates at least two of the plurality of cell units (30a, 30b, ..., 30i) separated by the at least one spacer (31) stacked between the at least two cell units (30a, 30b, ..., 30i), wherein the plurality of crossbeams (12a, 12b, 12c, 12d) and the plurality of cell units (30a, 30b, ..., 30i) is arranged so that at least one venting path (32) per cell unit (30a, 30b, ..., 30i) is provided, wherein each venting path (32) connects the respective cell unit (30a, 30b, ..., 30i) with a respective venting device (33) of the corresponding accommodation chamber (17a, 17b, 17c) without passing an adjacent cell unit (30a, 30b, ..., 30i).

## Amended claims

### Amended claims in accordance with Rule 137(2) EPC.

1. A battery pack (10), comprising:
- a battery housing (16) providing an interior space and comprising a plurality of crossbeams (12a, 12b, 12c, 12d) dividing the interior space of the battery housing (16) into a plurality of separated accommodation chambers (17a, 17b, 17c),
- a plurality of cell units (30a, 30b, ..., 30i) arranged within the battery housing (16), wherein each of the cell units (30a, 30b, ..., 30i) comprises a plurality of stacked battery cells (20), wherein each of the accommodation chambers (17a, 17b, 17c) accommodates at least two of the plurality of cell units (30a, 30b, ..., 30i) separated by at least one spacer (31) stacked between the at least two cell units (30a, 30b, ..., 30i), and
- at least one venting path (32) per cell unit (30a, 30b, ..., 30i), wherein each venting path (32) connects the respective cell unit (30a, 30b, ..., 30i) with a respective venting device (33) of the corresponding accommodation chamber (17a, 17b, 17c) without passing an adjacent cell unit (30a, 30b, ..., 30i),
wherein the venting paths (32) of two adjacent cell units (30a, 30b, ..., 30i) within the same accommodation chamber (17a, 17b, 17c) extend through the spacer (31) stacked between the two adjacent cell units (30a, 30b, ..., 30i),
wherein the venting paths (32) are geometrically constrained by the at least one spacer (31) and the cross-beams (12a, 12b, 12c, 12d), whereby a height of the cross-beams (12a, 12b, 12c, 12d) reaches from the bottom of the housing (16) to a top of the housing (16), and
wherein the venting device (33) is arranged in a bottom cover (19) of the housing (16) below the spacer (31).

2. The battery pack according to claim 1, wherein
- the cell units (30a, 30b, ..., 30i) are connected between a positive battery pack terminal (40) and a negative battery pack terminal (41) such that the cell units (30a, 30b, ..., 30i) are electrically connected in a series connection (42), wherein
- the series connection (42) comprises at least two partial series connections (43a, 43b, 43c) each connecting a number of cell units (30a, 30b, ..., 30i) being larger than one in series

3. The battery pack according to claim 2, wherein the battery pack (10) comprises at least one disconnecting member (44) selectively interconnecting the at least two partial series connections (43a, 43b, 43c).

4. The battery pack according to claim 3, wherein the battery pack (10) is adapted to open the disconnecting member (44) in case of a thermal runaway, a shortcut between the positive battery pack terminal (40) and the negative battery pack terminal (41) and/or an accident of a vehicle (300) comprising the battery pack (10).

5. The battery pack according to any one of claims 2 to 4, wherein cell units (30a, 30b, ..., 30i) of each partial series connection (43a, 43b, 43c) are arranged in different accommodation chambers (17a, 17b, 17c).

6. The battery pack according to any one of the preceding claims, wherein the battery pack (10) comprises a vent gas guide (34) adapted to direct vent gas (35) of one of the cell units (30a, 30b, ..., 30i) to the respective venting device (33).

7. The battery pack according to any one of the preceding claims, wherein each of the accommodation chambers (17a, 17b, 17c) comprises at least one venting device (33) per cell unit (30a, 30b, ..., 30i).

8. The battery pack according to any one of the preceding claims, wherein each venting device (33) comprises a burst membrane (36) adapted to burst when a pressure within one of the accommodation chambers (17a, 17b, 17c) exceeds a predetermined pressure.

9. The battery pack according to any one of the preceding claims, wherein the battery cells (20) of each of the cell units (30a, 30b, ..., 30i) are electrically connected in series.

10. The battery pack according to any one of the preceding claims, wherein a lateral extension of each of the crossbeams (12a, 12b, 12c, 12d) matches a lateral extension of the battery housing (16).

11. The battery pack according to any one of the preceding claims, wherein the housing (16) comprises an interior separation member providing a collecting chamber within the housing (16), and each venting path (32) is arranged to extend into the collecting chamber.

12. The battery pack according claim 11, wherein the housing (16) comprises a duct member for a fluid communication between the collecting chamber and an exterior of the battery pack (10).

13. A vehicle (300) comprising the battery pack (10) according to any one of the preceding claims.

14. A method for assembling a battery pack (10) according to any one of the preceding claims, wherein the method comprises the steps of:
a) providing a battery housing (16) with an interior space and a plurality of crossbeams (12a, 12b, 12c, 12d), a plurality of cell units (30a, 30b, ..., 30i), a plurality of spacers (31) and a plurality of venting devices (33);
b) arranging the plurality of crossbeams (12a, 12b, 12c, 12d) so as to divide the interior space of the battery housing (16) into a plurality of separated accommodation chambers (17a, 17b, 17c);
c) arranging the plurality of cell units (30a, 30b, ..., 30i), the spacers (31) and the venting devices (33) within the battery housing (16), wherein each of the cell units (30a, 30b, ..., 30i) comprises a plurality of stacked battery cells (20), wherein each of the accommodation chambers (17a, 17b, 17c) accommodates at least two of the plurality of cell units (30a, 30b, ..., 30i) separated by the at least one spacer (31) stacked between the at least two cell units (30a, 30b, ..., 30i), wherein the plurality of crossbeams (12a, 12b, 12c, 12d) and the plurality of cell units (30a, 30b, ..., 30i) is arranged so that at least one venting path (32) per cell unit (30a, 30b, ..., 30i) is provided, wherein each venting path (32) connects the respective cell unit (30a, 30b, ..., 30i) with a respective venting device (33) of the corresponding accommodation chamber (17a, 17b, 17c) without passing an adjacent cell unit (30a, 30b, ..., 30i),
wherein the venting paths (32) of two adjacent cell units (30a, 30b, ..., 30i) within the same accommodation chamber (17a, 17b, 17c) extend through the spacer (31) stacked between the two adjacent cell units (30a, 30b, ..., 30i),
wherein the venting paths (32) are geometrically constrained by the at least one spacer (31) and the cross-beams (12a, 12b, 12c, 12d), whereby a height of the cross-beams (12a, 12b, 12c, 12d) reaches from the bottom of the housing (16) to a top of the housing (16), and
wherein the venting device (33) is arranged in a bottom cover (19) of the housing (16) below the spacer (31).
